# EUROPEAN PATENT APPLICATION

(11) **EP 4 385 710 A1**
(43) Date of publication of application: **19.06.2024**
(21) Application number: 22213595.6
(22) Date of filing: 14.12.2022
(51) Int. Cl.: B29C 64/118, B33Y 80/00

(54) **AN APPARATUS AND A METHOD FOR SEALING AN OPENING IN A SMALL TUBULAR VESSEL**

(71) Applicant: Ecole Polytechnique Fédérale de Lausanne (EPFL), 1015 Lausanne (CH)
(72) Inventor: Mieville, Pascal, 1206 Geneva (CH); Villat, Keyan Michel, 1012 Lausanne (CH)
(74) Representative: Odoom, Ernest

(57) **Abstract**

The present invention relates to a method and an apparatus for closing sample tubes. Embodiments of the invention use a 3D-printer head having one or more nozzles for delivering viscous polymer material to create a plug in the opening of the sample tube.

## Description

### TECHNICAL DOMAIN

The present disclosure relates generally to the domain of sealing means for vials or tubes. More particularly, an automated method for sealing a container for chemical or biological samples is disclosed. The method may be used for sterile sealing of the container once the sample has been inserted therein.

### BACKGROUND

Embodiments described herein may be used in the field of testing or analysis of samples, such as biological samples, chemical samples or samples having both a chemical and a biological nature, especially when such samples are held in a test tube, vial or other vessel or container generally used in the domain. For example, in the field of Nuclear Magnetic Resonance (NMR) spectrometry for studying the chemical composition of a sample or for determining the presence, absence or concentration of particular components in a sample. An NMR spectrum of a sample is generally obtained by placing the sample in an elongate sample container, known as an NMR tube, placing the sample, in its container, in a strong magnetic field to polarise the nuclear spins of the sample and then subjecting the sample to a weak oscillating magnetic field to perturb said polarisation, then detecting and analysing the electromagnetic waves emitted by the nuclei of the sample as a result of the perturbation. NMR tubes are generally made from glass and exist in several different sizes, having diameters ranging from 1 mm to about 10 mm and having lengths of about 10 cm to 18 cm. Depending on the needs and circumstances, after placing a sample in an NMR tube, the tube may then be sealed using a polyethylene cap, or the tube may be flame sealed or sealed using a polytetrafluoroethylene tap, such as those used in a "Schlenk line", or a small rubber septum may be used to seal the tube.

In Nuclear Magnetic Resonance spectroscopy, unlike other types of spectroscopy, the quality of the sample has a profound effect on the quality of the resulting spectrum. Therefore, a high degree of automation is preferred, which also ensures the rapid availability of measurement results, thus avoiding the degradation or otherwise alteration of the ample to be analysed. Instrumental analysis having a high degree of automation is used, for example, in so-called series assays, in which a plurality of similar samples, in particular biological samples, are to be assayed in the same way.

Similarly, samples used in biological experiments or tests must be of a high quality. For example, test tubes containing biological material such as blood, or material containing other cells, needs to be correctly sealed to avoid any contamination and/or to facilitate further handling, for example manipulations which are necessary for further processes such as centrifugation. Other fields where embodiments described herein may find use include biological testing such as the Elisa test, which requires a large number of test tubes, or wells, to be processed as fast as possible.

Automated systems are known in the state of the art, some of which include the use of sample frames which have retainers for a plurality of measurement samples to be held during sample preparation and/or for loading the samples into the measurement apparatus. United States patent publication number 6686740B1, for example, discloses a device for transporting individual elongate sample vessels towards or from their predetermined positions within their retainers, where the device is configured to grip the sample vessel by its cap reduce the risk of the vessel breaking.

Known systems and methods for closing or otherwise sealing sample containers include the use of caps, stoppers or beads, for example, which must each be picked up and manipulated, using by a robotic hand, and placed in the container, which may then be placed or inserted in the orifice or opening in the container, and then screwed in, pushed in or crimped. These steps may be cumbersome, time-consuming or error-prone.

It is recognized that handling of sample vessels may be made easier if the sample vessels have caps which are already provided before sample preparation. In this case, the filling of the sample vessels may be performed through a hole in the cap. Caps having such a predefined hole are known in the art. For example, some vials know in the art comprise a cap with a hole on top, and wherein a septum is located near the hole. A needle, more generally a hypodermic needle, may be inserted through the septum to allow for some of the sample material contained in the vial while reducing the risk of contaminating the sample. Furthermore, if the sample substance contains volatile solvents, the sample vessel is to be tightly closed after filling, to avoid vaporization of the solvent and thus a possible change in characteristics of the sample.

However, the problem remains that closing sample vessels, even those which have a cap having a hole for facilitating handling, can still prove to be a difficult operation, and one which is difficult to integrate into an automated sample preparation process, for example.

### BRIEF SUMMARY OF THE INVENTION

An object of the present invention is to provide a simpler, more reliable, and faster method for closing sample vessels in order to facilitate their simple integration into automated processes for sample handling.

Given the drawbacks which exist in the state of the art, a goal of the present invention is to automate the process of sample preparation, for example filling the sample vessels and/or loading the measurement apparatus, which may involve transferring a sample vessel to the measurement position in the measurement apparatus and back. Embodiments may find use in automating the analysis of the measurement results.

Embodiments of the present invention may be used for sealing different types of sample containers including such sample vessels, as long as the vessel comprises an upper opening for receiving the sample. Some embodiments may be used in vials which have an opening and a septum in applications where contamination of the sample is to be avoided and evaporation of the contents of the container is to be avoided.

According to a first aspect, provision is made for a sealing apparatus for sealing a container for a chemical or biological sample, the container having an opening for receiving said sample. Advantageously, the sealing apparatus comprises:
a 3D-printer head comprising one or more nozzles, the 3D-printer head being configured to receive a feed of a 3D-printable polymer filament; and
at least one processor configured at least to control the printer head to soften at least a part of the filament until said filament reaches a viscosity which is sufficient to allow at least one drop of viscous polymer to exit the nozzle and to form a plug in the opening of the container.

According to different embodiments, the filament material may be selected from a number of different 3D-printable polymers such as a thermosetting epoxy resin, a thermoplastic resin or an elastomer, for example.

According to an embodiment, the 3D-printer head may be adapted to perform said softening of the filament by heating at least a part of the filament.

According to an embodiment, the apparatus may further comprise a cooling device configured to engender cooling at the drop of viscous polymer, thus causing the plug to form within the opening.

According to an embodiment, the apparatus may be an automated apparatus for sealing a plurality of said containers, all of the containers being held in a multi-container support, wherein the at least one processor is further configured to engender a controlled relative displacement of the 3D-printer head with respect to the multi-container support in X, Y and Z directions so as to insert a plurality of viscous polymer drops into the openings of a respective plurality of containers in the multi-container support, thereby forming plugs in their respective containers.

A container may be a test tube, a vial an NMR tube or any other vessel or container generally used for collecting. Storing, mixing or analysing chemical or biological samples. The opening can be a hole, an orifice at the top of a tube, or an aperture, which will allow for the sample to be introduced into the container.

According to another aspect, an automated system is provided for preparing one or more chemical samples, or biological samples, or samples of both a chemical and biological nature, the samples being prepared in one or more respective containers each having an opening for receiving the sample, said system comprising an automated filling device comprising a filling nozzle for inserting the sample into the container via the opening in the container, said system characterised in that it further comprises a sealing apparatus as described above, configured to plug the openings of the containers after the sample has been inserted into its respective container.

According to an embodiment, the automated system may further comprise a sipping device for collecting the sample from a sample reservoir, the system being configured to transfer the sample from the sipping device to the filling nozzle.

According to still another aspect, a method for sealing a container for a chemical or a biological sample is provided, the container having an opening for receiving said sample, the method comprising:
- providing a 3D-printer head having a feed of a 3D-printable polymer filament;
- heating at least a part of the filament to cause at least one drop of viscous polymer to exit from one or more nozzles of the printer head at or within the opening of the container;
- allowing the polymer drop to at least partially enter the opening of the container;
   allowing the polymer drop to at least partially set thereby forming a plug in the opening of the container.

According to an embodiment, the method further comprises transversally displacing the head in order to cause one or more of the nozzles of the printer head to brush against the opening of the container thus causing said drop to become dislodged from the printer head.

According to an embodiment, the method further comprises actively cooling the polymer drop at the opening of the container to precipitate said setting of the polymer drop.

According to an embodiment, the method is an automated method using the automated system described herein.

According to yet another aspect, use of a 3D-printer head having a feed of a 3D printable polymer filament is disclosed, said use for sealing or otherwise plugging an opening in a container for receiving a chemical or biological sample, said sealing or plugging achieved by forming a plug from a drop of viscous polymer from at least a part of the 3D-printable polymer filament at one or more nozzles of the 3D-printer head using the method described above.

Embodiments described herein may be used for plugging or otherwise sealing a vessel such as a vial or a test tube or an NMR tube or other container for holding a chemical or biological sample or a chemical and biological sample, usually for sterile storage of the sample and/or for further processing steps to be carried out on the sample, such as NMR processing or ELISA processing. Containers which have been sealed according to some embodiments are suitable to be used in processing steps which involve centrifugation as the plug used to seal the container, when applied to the container, does not change the mass distribution of the container/plug system, with the mass being preferably evenly distributed around a central axis of the elongate container or vessel.

Embodiments of the present invention allow for rapid closure of a sample container, such as a test tube or a vial, using a polymer plug. In some embodiments the plug may form a tight seal, suitable for preventing the contents of the container from spilling, leaking or evaporating or dispersion, in cases where the sample is in powder form. Systems and methods described herein make use of a 3D-printer head having one or more nozzles through which a drop of molten polymer is caused to form and is used to plug or otherwise seal the opening of the sample container. The systems may be operated manually or they may be automated, forming part of an automated production line having a standard analytical sample preparation machine, for example. Many of the embodiments provide a cheaper solution to known methods, involving less handling, such as picking up and aligning, for example. The methods are safe and provide sealed, safe, chemically stable containers which are useable for many different applications where automated production and processing of sterile samples is required.

### BRIEF DESCRIPTION OF THE DRAWINGS

The inventive concepts described herein will be better understood thanks to the detailed description which follows and the accompanying drawings, which are given as non-limiting examples of embodiments of the inventive concepts, namely:
Figure 1, illustrating a processor-controlled 3D-printer head and a sample container used in embodiments described herein;
Figure 2, showing a system according to an embodiment disclosed herein;
Figure 3, illustrating a view of a system according to an embodiment disclosed herein;
Figure 3a, showing an enlarged view of a part of the system shown in Figure 3, where the print head nozzle and sample container openings can be seen;
Figure 4, illustrating a top view of one of the different types of sample containers which can be used in embodiments of the invention described herein;
Figure 4a, illustrating a side view of the container shown in figure 4; and
Figure 4b, illustrating a closer side view of a container similar to the containers illustrated in figures 4 and 4a, whereupon a plug according to an embodiment described herein is deployed.

### DETAILED DESCRIPTION

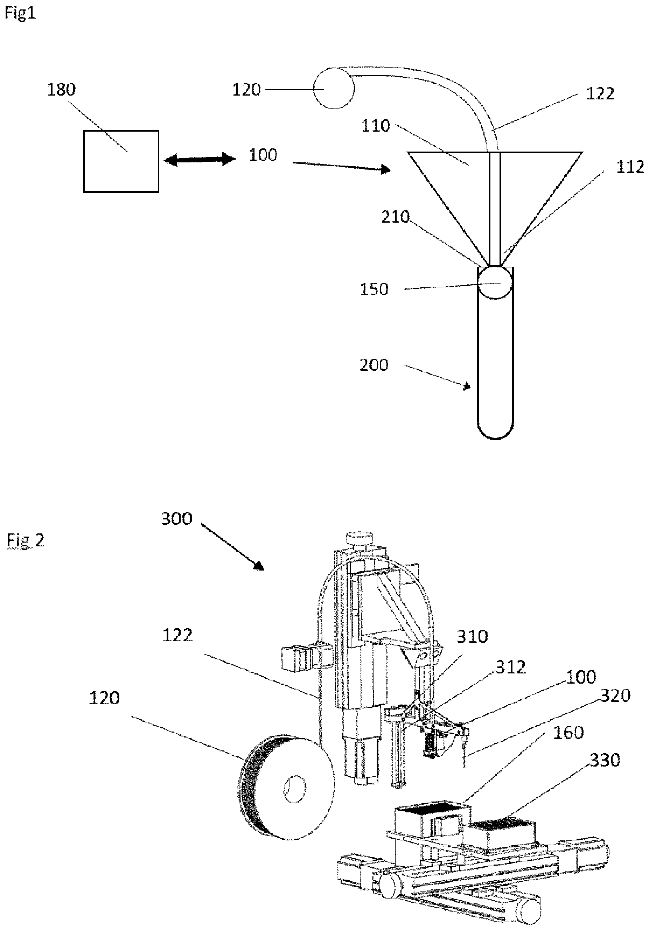

Figure 1 shows part of a sealing apparatus according to an embodiment of the present invention. The sealing apparatus may be used, either stand-alone or as part of an industrial processing line, to obstruct or otherwise seal the opening of a container for a chemical sample or for a biological sample or biological and chemical sample. Suitable containers are generally elongate in form, whose opening is somewhat narrow in dimension in comparison to the container's length. Such containers include vials, test tubes, NMR tubes or wells for ELISA processing. The opening is wide enough to allow for the sample to be inserted or removed from the container.

An embodiment of a sealing apparatus, as illustrated in Figure 1, comprises a 3D-printer head, which may have one or more nozzles through which material used to build up layers of material to form a three-dimensional object may pass. Different types of 3D-printer heads exist. However, in embodiments of the present invention, the type of printer head which is preferred is one which receives a feed of a solid polymer wire or filament which the printer head, under control of a processor, can be made to deposit layers of the polymer, via one or more nozzles in the printer head, onto a target surface. Different types of printer head use different techniques such as extrusion or heating or a combination of both extrusion and heating to push the polymer, whose phase has been changed from solid to a viscous liquid or rubbery phase so that it may flow from the nozzle towards the target surface. Usually, heat is used to control the change in phase until a part of the polymer filament has become viscous enough to flow from the nozzle. The temperature at which the polymer structure, especially an amorphous polymer structure, turns to a viscous liquid or rubbery state is called the Glass Transition Temperature. Depending on the type of polymer used in embodiments, and its chemical structure, this temperature may lie somewhere between about 160 and 300 degrees Celsius. Another way to describe this process is to say that the heated polymer filament melts, giving a viscous polymer which can be deposited via the nozzle of the printer head. In all cases, it can be said that part of the filament is softened through heating until it reaches a level of viscosity which is sufficient to allow a drop or droplet to of the viscous polymer to form at the end of the nozzle or nozzles of the printer head. Any of the known techniques employed in the domain of 3D printing may be used to provide said softening of the polymer filament, usually through heating by any from a number of known means. Extrusion techniques may be employed to cause the viscous polymer material to flow from the nozzle.

The nozzle of the printer head may be placed near the opening of the container so that the drop of viscous polymer may enter the opening. By appropriate control of the temperature at the printer head and/or the nozzle, the viscosity of the drop may be controlled so that the drop which enters the opening of the container sticks to the sides of the opening of the container instead of flowing right through the opening and possibly contaminating any sample which may be in the container. Also, for avoiding problems related to contamination of the sample, it is preferred to use the polymer in filament from rather than in powder of granule form, so that particulates do not accidentally end up contaminating the sample. The polymer may be an elastomer, which is resilient and can form a hard, tight-fitting plug. Other types of polymers may also be used, especially when the plug should not be gas permeable.

The controller or processor for the printer head may be configured to control the feed rate of the polymer filament through the head and/or to control the heating temperature and the viscosity of the softened polymer to form the drop of viscous polymer having the required size and viscosity.

According to different embodiments, different methods for detaching the drop from the nozzle may be employed. In one embodiment, the drop may be allowed to simply detach itself, depending on its viscosity and the volume of material present in the drop. According to another embodiment, the drop may detached from the nozzle by displacing the nozzle upward and away. According to yet another embodiment, the drop may be detached from the nozzle by moving the nozzle laterally or by moving the container laterally, or both, to cause the nozzle to brush against the inside of the container at the opening. The nozzle may be moved up using a circular motion to detach the drop. According to still another embodiment, the print head comprises a cutting tool to cut the viscous polymer drop near the nozzle to detach the drop.

According to an embodiment, once the drop has been attached to the inside of the container, hardening or otherwise setting of the viscous polymer drop may be precipitated by blowing cool air or other gas towards the plug in the container, thus cooling the polymer until it hardens to form the plug.

The sealing apparatus may be an automated apparatus where the moving of the head and its nozzle with respect to the container or with respect to a number of containers being held in a multi-container support is to be achieved. In this embodiment a processor may be used to control the relative displacement of the head relative to the various containers is achieved. The processor used for controlling these displacements may be the same one which was used to control the softening of the polymer filament, or it may be a different one. Thus, the processor may control displacements of the printer head in X, Y and Z directions or it may control displacements of a carriage on which the multi-container support lies to achieve the same effect of allowing the plurality of containers to be processed.

According to another embodiment, the sealing apparatus may be part of system for preparing sample vials, where said preparation includes filling the sample containers with samples followed by sealing the sample containers. Such a system further includes an automated filling device having a filling nozzle configured to insert the samples into the containers The system may further include a sipping device configured to collect the samples from a sample reservoir. The samples may therefore be taken from the sample reservoir, placed in the sample containers and the containers then sealed.

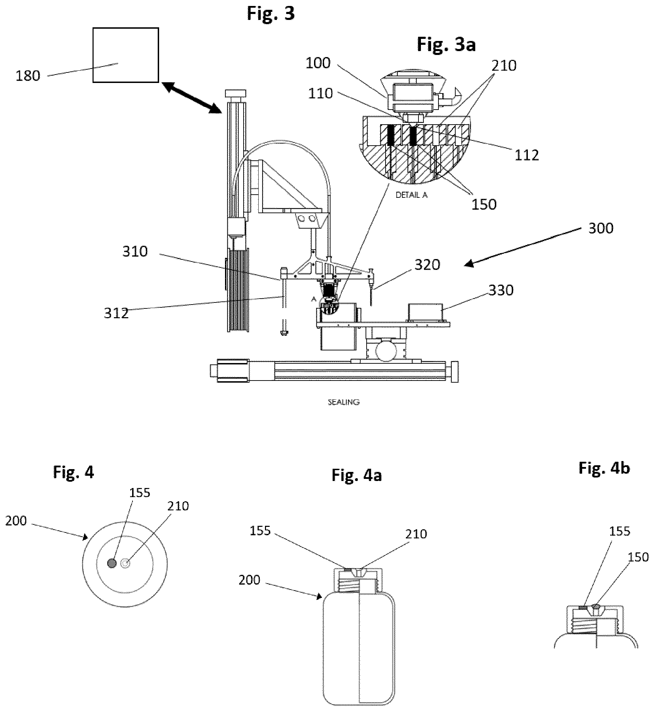

Figure 4 shows another type of sample container which can be sealed using a system or a method according to an embodiment disclosed herein. The opening is shown in the middle of a cap which may be attached to the container. The cap also has a septum (150) through which a needle may be entered to either extract some of the contents or add some content. The sample container of figure 4 maintains an even distribution of mass after the container has received its plug.

Polymers used in embodiments of the present invention may be thermosetting epoxy resins, thermoplastic resins, or elastomers.

Embodiments of the present invention may use polymer filament having a diameter of about 2.85mm, which is a standard in the industry. Nozzles used in the 3D-printer heads disclosed herein may have a diameter which is selected according to the volume of the cavity that is to be plugged. Print nozzle sizes of around 2mm have been found to provide good results for NMR tubes, for example. Suitable polymers for the polymer filament include those which are derivatives of polytetrafluoroethylene, which provide for good 3D printing results and which are chemically stable. Chemical stability of the plug is a requirement especially where the plug is to be used in an application where solvents are used, for example in RMN analyses. Solvents used in such analyses include deuterated acetone, deuterated methanol, chloroform and dimethyl sulfoxide. Other polymers may be selected depending on which solvents will be used.

### LIST OF REFERENCES

100: sealing apparatus
110: 3D-printer head
112: one or more nozzles
120: feed of 3D-printable polymer filament
122: polymer fiament
150: plug
155: septum
160: multi-container support
180: at least one processor
200: container
210: opening
300: automated system
310: automated filling device
312: filling nozzle of automated filling device
320: sipping device for collecting sample
330: sample reservoir

## Claims

1. A sealing apparatus (100) for sealing a container (200) for a chemical or biological sample, the container (200) having an opening (210) for receiving said sample, **characterised in that** said sealing apparatus (100) comprises:
a 3D-printer head (110) comprising one or more nozzles (112), the 3D-printer head (110) being configured to receive a feed (120) of a 3D-printable polymer filament (122); and
at least one processor (180) configured at least to control the printer head (110) to soften at least a part of the filament (122) until said filament (122) reaches a viscosity which is sufficient to allow at least one drop of viscous polymer to exit the nozzle (112) and to form a plug (150) in the opening (210) of the container (200).

2. The apparatus (100) according to claim 1, wherein said polymer is an elastomer.

3. The apparatus (100) according to either of claims 1 or 2, wherein said 3D-printer head (110) is adapted to perform said softening of said filament (122) by heating at least a part of the filament (122).

4. The apparatus (100) according to any of the preceding claims, the apparatus (100) further comprising a cooling device configured to engender cooling at the drop of viscous polymer thus causing the plug (150) to form within the opening (210).

5. The apparatus (100) according to any of the preceding claims, said apparatus (100) being an automated apparatus (100) for sealing a plurality of said containers (200) being held in a multi-container support (160), wherein the at least one processor (180) is further configured to engender a controlled relative displacement of the 3D-printer head (110) with respect to the multi-container support (160) in X, Y and Z directions so as to insert a plurality of viscous polymer plugs (150) into the openings (210) of a respective plurality of containers (200) in the multi-container support (160).

6. An automated system (300) for preparing one or more chemical or biological samples in one or more respective containers (200) each having an opening (210) for receiving the sample, said system (300) comprising an automated filling device (310) comprising a filling nozzle (312) for inserting the sample into the container (200) via the opening (210) in the container (200), said system (300) **characterised in that** it further comprises a sealing apparatus (100) according to any of the preceding claims, configured to plug the openings (210) of the containers (200) after the sample has been inserted into its respective container (200).

7. The automated system (300) according to claim 6, the system (300) further comprising a sipping device (320) for collecting the sample from a sample reservoir (330), the system (300) being configured to transfer the sample from the sipping device (320) to the filling nozzle (312).

8. A method for sealing a container (200) for a chemical or biological sample, the container (200) having an opening (210) for receiving said sample, the method comprising:
providing a 3D-printer head (110) having a feed of a 3D-printable polymer filament (122);
heating at least a part of the filament (122) to cause at least one drop of viscous polymer to exit from one or more nozzles (112) of the printer head (110) at or within the opening (210) of the container (200);
allowing the polymer drop to at least partially enter the opening (210) of the container (200);
allowing the polymer drop to at least partially set, thereby forming a plug in the opening (210) of the container (200).

9. The method according to claim 8, further comprising transversally displacing the head in order to cause one or more of the nozzles (112) of the printer head (110) to brush against the opening (210) of the container (200) thus causing said drop to become dislodged from the printer head (110).

10. The method according to either of claims 8 or 9, further comprising actively cooling the polymer drop at the opening (210) of the container (200) to precipitate said setting of the polymer drop.

11. The method according to any of claims 8 to 10, the method being an automated method, the method using the automated system according to either of claims 6 or 7.

12. Use of a 3D-printer head (110) having a feed of a 3D printable polymer filament (122) for sealing an opening (210) in a container (200) for receiving a chemical or biological sample, said sealing by forming a plug from a drop of viscous polymer from at least a part of the 3D-printable polymer filament (122) at one or more nozzles (112) of the 3D-printer head (110) using the method according to any of claims 8 to 11.
